# EUROPEAN PATENT APPLICATION

(11) **EP 4 484 377 A1**
(43) Date of publication of application: **01.01.2025**
(21) Application number: 23306022.7
(22) Date of filing: 26.06.2023
(51) Int. Cl.: C01F 17/10, C01F 17/17, C22B 3/16, C22B 3/26, C22B 3/38, C22B 59/00

(54) **AN EFFICIENT SEPARATION PROCESS FOR RARE EARTH ELEMENT COMPOUNDS AND NOVEL RARE EARTH ELEMENT COMPLEXES USED THEREFOR**

(71) Applicant: ETH Zurich, 8092 Zürich (CH)
(72) Inventor: MOUGEL, Victor, 8046 Zurich (CH); PERRIN, Marie Amélie, 8050 ZURICH (CH)
(74) Representative: Deblon, Jörg-Stephan

(57) **Abstract**

The present invention relates to a separation process for rare earth element compounds by converting a mixture of rare earth element compounds into novel thiometallate complexes which exhibit substantially different structures and thus solubility depending on the rare earth metals employed in said process and their state of oxidation. The invention further encompasses the thiometallate complexes as such.

## Description

### Field of the Invention

The present invention relates to a separation process for rare earth element compounds by converting a mixture of rare earth element compounds into novel thiometallate complexes which exhibit substantially different structures and thus solubility depending on the rare earth metals employed in said process and their state of oxidation.

The invention further encompasses the thiometallate complexes as such.

### Background

The Rare Earth Elements (REEs) are a group of 17 chemically similar metallic elements comprising 15 lanthanides as well as scandium and yttrium. In the current context of digitization and energy transition to mitigate climate change, REEs are key in many technologies, from permanent magnets in wind turbines to batteries in electric cars and lamp phosphors in optical displays and energy-saving lamps. The demand for these elements is therefore expected to increase tremendously in the next 20 years. But because of their unequal geographic distribution they are highly susceptible to global supply risks and surge pricing. Furthermore, current mining and separation technologies typically go along with a high environmental burden due to radioactive by-products, very high water consumption and extensive use of chemicals which often leak in groundwater and waterways.

To efficiently utilize existing resources it is key to build a sustainable and circular economy for REEs. In fact, electronic waste represent very large reserves of REEs which are currently not re-entering the market. The total global recycling potential of REEs from magnets, batteries and phosphors is estimated to 5,600 and 10,700 metric tons, similar to the annual usage of REEs in Europe. Yet, the current recycling rates are below 1%, see [1] P. Fröhlich, T. Lorenz, G. Martin, B. Brett, M. Bertau, Angew. Chem. Int. Ed. 2017, 56, 2544-2580 and [2] C. Hagelüken, D. Goldmann, Miner. Econ. 2022.

A summary on REE recycling technologies is given in [3] Nikhil Dhawan, Himanshu Tanvar "A critical review of end-of-life fluorescent lamps recycling for recovery of rare earth values, Sustainable Materials and Technologies 32 (2022).

Among the REEs, Europium (Eu) is one of the most critical. Its scarcity - Eu accounts for only 0.05-0.10% w/w of common ores - and the high demand to produce red lamp phosphors Y₂O₃:Eu³⁺ have resulted in high market value (see [4] Y. Fujita, S.K McCall, D. Ginosar," Recycling rare earths: Perspectives and recent advances"; MRS Bulletin 47, 283-288; . and [5] C. Ramprasad, Willis Gwenzi, Nhamo Chaukura, Nur Izyan Wan Azelee, Anushka Upamali Rajapaksha, M. Naushad, S. Rangabhashiyam, "Strategies and options for the sustainable recovery of rare earth elements from electrical and electronic waste", Chemical Engineering Journal, 442,1 (2022).

Efficient separation of europium and yttrium is very attractive to take advantage of cheap spent fluorescent lamps, since the REEs contents are much higher than in natural ores, making the recycling substantial from an extraction perspective ([6] A. Anand, R. Singh, Sep. Purif. Rev. 2021, 50, 96-112]). However, separation of the REEs is extremely challenging due to their similar chemical properties, which all occur in the stable trivalent oxidation state. Separation by traditional methods, such as solvent extraction, are both time-consuming and expensive because many extraction steps are necessary to reach high purity products ([7] Y. Wu, X. Yin, Q. Zhang, W. Wang, X. Mu, Resour. Conserv. Recycl. 2014, 88, 21-31 and [8] E. O. Opare, E. Struhs, A. Mirkouei, Renew. Sust. Energ. Rev. 2021, 143, 110917).

Redox chemistry on the other hand proved to be much more efficient to recover europium, since Eu is the REE with the highest reduction potential (E1/2 = - 0.34 V vs. SHE for the Eu(II/III) couple), see [9] L. R. Morss, Chem. Rev. 1976, 76, 827-841. This reduction can be conducted with chemical reductants like zinc powder or zinc amalgam, but it poses the problem of zinc contamination of the rare-earth solution and mercury pollution in the case of zinc amalgam. Electrochemical reduction is attractive but currently suffers from low efficiencies due to the competition with the hydrogen evolution reaction. Finally, to circumvent the use of toxic chemicals and improve selectivity, photochemical methods have also been used. However, they have so far relied on polychromatic mercury lamps to induce the charge-transfer band of water to reduce Eu(lll) to Eu(ll) (λₘₐₓ = 188 nm), and the backward oxidation can be induced by visible light (λₘₐₓ = 366 nm) making the photochemical reduction in water an overall inefficient process ([10] A. Kumari, M. K. Jha, D. D. Pathak, S. Chakravarty, J.-c. Lee, Sep. Purif. Rev. 2019, 48, 91-121).

Photochemical reduction to induce precipitation of Eu(ll) in the presence of sulfate ions has been reported with over 95% efficiency, however this process required long UV exposure (24-30h at λₘₐₓ = 240 nm) ([11] B. Van den Bogaert, D. Havaux, K. Binnemans, T. Van Gerven, Green Chem. 2015, 17, 2180-2187; [12] Y. Wu, Q. Zhang, T. Zuo, J. Clean. Prod. 2019, 226, 858-865).

In US 2012/0027651A a method of recovery of rare earth element compounds from fluorescent lamps is disclosed. The method comprises six steps including mechanical separation of coarse components, separation of the REE halophosphates, extraction in acids of easily soluble rare-earth fluorescent substances, mainly Yttrium and Europium oxides, extraction in acids of rare earth fluorescent substances which dissolve with difficulty like rare-earth phosphates, breakdown of the remaining components which contain rare earths such as rare-earth-aluminates and a final treatment.

WO 2015/106324 A1 discloses a solvent extraction process for the extraction of rare earth element compounds as a group and for the separation of a mixture of rare earths into the individual elements by extracting the rare earths from a feed solution containing anions that form weakly extracting complexes such as chloride or sulfate salts to an organic phase through complex formation with anions present exclusively In the organic phase. The organic phase comprises a water-immiscible ionic liquid with nitrate or thiocyanate anions. In addition to the ionic liquid, the organic phase can also contain a neutral extractant. The rare earths are finally stripped as chloride or sulfate salts from the loaded organic phase.

A further process for the recycling of critical rare earth elements (REEs) from end of life lamp fluorescent powder electronic waste is disclosed in WO 2019/201581 A1. The process involves the use of mineral acid for the sequential digestion of REE compounds and numerous liquid-liquid extractive separation cycles using selective extractant ligand molecules followed by a hydrometallurgical process to separate Y, Eu, and Tb, to more than 99% purity and Gd, La and Ce to elevated purities each from the digested electronic waste.

DE102014206223 and DE 102014224015 present a process for recovering rare earths from rare earth-containing compositions such as, for example, FeNdB magnets or fluorescent lamp waste as rare earth fluorides or rare earth oxalates, the process comprising the steps of crushing the rare earth-containing compositions under an inert gas atmosphere to a particle size in the range of 50 to 400 µm; adding solid ammonium chloride and chlorinating the chlorinatable metals to metal chlorides at a temperature in the range of 200 to 800°C for a period of 1 to 5 hours. Thereafter, an acidic solution is added to the metal chlorides followed by a multi-step workup to obtain rare earth-containing precipitates.

However, the necessity of either numerous extraction and filtration steps, the use of various complex organic chemicals or the application of very harsh conditions render the aforementioned processes commercially hardly attractive.

Therefore, and despite the progress made so far there was still a need to provide an efficient and facile process to produce, purify or recover and separate REE compounds from various sources.

### Summary of the Invention

According to one aspect of the invention, there is now provided a process for the separation of rare earth element compounds comprising at least the steps of
1) Reacting a mixture of at least two compounds of formula (I) comprising at least two different rare earth elements M,

   MAn₃ (I)

   wherein M denotes a rare earth metal ion in the oxidation state (+III) selected from the group consisting of:
   Sc, Y, La, Ce, Pr, Nd, Pm, Sm, Eu, Gd, Tb, Dy, Ho, Er, Tm, Yb and Lu, preferably Y, La, Ce, Pr, Nd, Sm, Eu, Gd, Tb, Dy, Ho, Er, Tm, Yb and Lu and
   An denotes a monoanion or 2 An together denote a dianion or 3 An together denote a trianion
   with compounds of formula (II)

   Cat₂(MetSₓO(₄₋ₓ)) (II)

   wherein
   Cat is a monocation or Cat₂ as a whole is a dication
   Met is W or Mo, preferably W
   x is 1, 2, 3 or 4, preferably 2, 3 or 4, more preferably 4
   in the presence of at least one organic donor solvent, preferably at least one organic donor solvent capable of coordinating to rare earth metal ions M thereby forming a precipitate and
2) separating the precipitate formed in step 1) from the residual solution.

Another aspect the invention relates to compounds comprising the structural units of formulae (III), (IV) or (V)

Cat₂[M^{II}(MetSₓO₍₄₋ₓ₎)₂] (III)

Cat₃[M^{III}L_{z}(MetSₓO₍₄₋ₓ₎)₃] (IV)

Cat₆[M^{III}(MetSₓO₍₄₋ₓ₎)₃]₂ (V)

wherein Cat, Met and x have the meaning including their preferential meaning given above, L denotes a donor solvent, preferably a donor solvent capable of coordinating to rare earth metal ions M, z is 0, 1 or 2, preferably 1 or 2 and
M in formula (III) is Eu, Yb, Sm, Tm or Dy
M in formula (IV) is Sc, Y, Nd, Sm, Eu, Gd, Tb, Dy, Ho, Er, Tm, Yb, Lu
M in formula (V) is La, Ce, Pr, Pm, Nd, Sm

The invention further encompasses the use of compounds of formula (II) for the separation of rare earth element compounds.

In a further aspect the invention encompasses a process for production, purification or recycling of rare earth metals comprising the inventive separation process.

Further aspects of the invention are disclosed in detail below.

### Brief description of the drawings

Figure 1 shows the ionic radii of rare earth elements versus the solubility of compounds comprising structural elements of formulae (III) to (V) depending on M.
Figure 2 shows the crystal structure of [NEt₄]₂[Eu^{II}(WS₄)₂] ▪ 2(MeCN) as determined by the method disclosed in the experimental part and serving as an example for polymeric compounds comprising the structural element of formula (III).
Figure 3 shows the crystal structure of [NEt₄]₃[Eu^{II}(MeCN)₂(WS₄)₃] MeCN as determined by the method disclosed in the experimental part and serving as an example for compounds comprising the structural element of formula (IV).
Figure 4 shows the crystal structure of [NEt₄]₃[Y^{II}(MeCN)₂(WS₄)₃] as determined by the method disclosed in the experimental part and serving as another example for compounds comprising the structural element of formula (IV).
Figure 5 shows the crystal structure of [NEt₄]₆[La^{II}(WS₄)₃]₂ as determined by the method disclosed in the experimental part and serving as example for compounds comprising the structural element of formula (V).
Figure 6 shows the crystal structure of [NEt₄]₆[Sm^{III}(MS₄)₃]₂ as determined by the method disclosed in the experimental part and serving as example for compounds comprising the dimeric structural element of formula (V) and tetrathiomolybdate.
Figure 7 shows the crystal structure of [NEt₄]₃[Y^{III}(MeCN)₂(MoS₄)₃] as determined by the method disclosed in the experimental part and serving as another example for compounds comprising the structural element of formula (IV) but comprising tetrathiomolybdate.

### Detailed description of the Invention

The invention also encompasses all combinations of all levels of preferential embodiments or parameter ranges as disclosed hereinafter either with each other or with the broadest disclosed parameter range or embodiment.

Whenever used herein the terms "including", "for example", "e.g.", "such as" and "like" are meant in the sense of "including but without being limited to" or "for example without limitation", respectively.

In step 1) of the inventive process a mixture of at least two compounds of formula (I) is reacted with the compounds of formula (II) i.e. thiometallates in the presence of at least one organic donor solvent.

As a starting material at least two compounds of formula (I) MAn₃ are employed.

In one embodiment, where An represents a monoanion such monoanion is specifically and preferably selected from the group consisting of: nitrate, sulfate, chloride, bromide, iodide, thiocyanate, perchlorate, hexafluorophosphate, tetrafluoroborate, phosphate, phosphonates R¹PO₃²⁻, hydrogen phosphonates R¹PO₃H⁻; organophosphinates R₂¹PO₂⁻ or R¹PO₂H⁻ , sulfonates R¹SO₃⁻, carboxylic acids R¹CO₂⁻, wherein R¹ denotes alkyl or aryl.

Where 2 An together represent a dianion such dianion is specifically and preferably selected from the group consisting of disulfonates R²(SO₃⁻)₂, dicarboxylates R²(CO₂⁻)₂, wherein R² denotes alkane-diyl or aryl-diyl.

Where 3 An together represent a trianion such triianion is specifically and preferably selected from the group consisting of tricarboxylates R³(CO₂⁻)₃, wherein R³ denotes alkane-triyl or aryl-triyl.

Where used above the alkyl, aryl, alkane-diyl, alkanetriyl, aryl, aryl-diyl and aryl-triyl substituents are
- either not, once, twice or more than twice interrupted by non-successive functional groups selected from the group consisting of:

   -O-, -NR⁴-

   and
- either not, additionally or alternatively either once, twice or more than twice interrupted by bivalent residues selected from the group consisting of **heterocyclodiyl, heteroaryl-diyl and** aryl-diyl,
   and
- either not, additionally or alternatively either once, twice or more than twice substituted by substituents selected from the group consisting of:
   oxo, halogen, cyano, phenyl, C₁-C₈-alkoxy, C₁-C₈-alkylthio, -PO(N(R⁵)₂)₂, PO(OR⁵)₂, -SO₂N(R⁴)₂, -N(R⁴)₂, -CO₂N(R⁵)₂, -COR⁴, -(CO)OR⁴,
      wherein
   R⁴ is independently selected from the group consisting of hydrogen, C₁-C₈-alkyl, phenyl, and heterocyclyl or N(R⁴)₂ as a whole is a N-containing heterocycle,
   R⁵ is independently selected from the group consisting of C₁-C₈-alkyl, phenyl, and heterocyclyl or N(R⁴)₂ as a whole is a N-containing heterocycle

As used herein, and unless specifically stated otherwise, **aryl** denotes carbocyclic aromatic substituents, whereby said carbocyclic, aromatic substituents are unsubstituted or substituted by up to five identical or different substituents per cycle. For example and with preference, the substituents are selected from the group consisting of fluorine, bromine, chlorine, iodine, nitro, cyano, C₁-C₈-alkyl, C₁-C₈-alkoxy, C₆-C₁₄-aryl, in particular phenyl and naphthyl.

In a preferred embodiment, the carbocyclic, aromatic substituents are unsubstituted or substituted by up to three identical or different substituents per cycle selected from the group consisting of fluorine, chlorine, cyano, C₁-C₈-alkyl, C₁-C₈-haloalkyl, C₁-C₈-alkoxy, C₁-C₈-haloalkoxy, C₆-C₁₄-aryl, in particular phenyl.

In a more preferred embodiment the carbocyclic, aromatic substituents are unsubstituted or substituted by up to three identical or different substituents per cycle selected from the group consisting of fluorine, C₁-C₈-alkyl, C₁-C₈-perfluoroalkyl, C₁-C₈-alkoxy, C₁-C₈-perfluoroalkoxy, and phenyl.

The definitions given above, including their areas of preference, also apply analogously to **aryl-diyl** and **aryl-triyl** substituents. Preferred aryl substituents are C₆-C₁₄-aryl substituents, more preferably phenyl, naphthyl, phenanthrenyl and anthracenyl. The term C₆-C₁₄ indicates that the number of carbon atoms of the respective carbocyclic, aromatic ring system is from 6 to 14. The possible and preferred substitution patterns mentioned above are likewise applicable.

As used herein and unless specifically stated otherwise, **heterocyclyl** denotes heterocyclic aliphatic, aromatic or mixed aliphatic and aromatic substituents in which no, one, two or three skeleton atoms per cycle, but at least one skeleton atom in the entire cyclic system is a heteroatom selected from the group consisting of nitrogen, sulphur and oxygen which are unsubstituted or substituted by up to five identical or different substituents per cycle, whereby the substituents are selected from the same group as given above for carbocyclic aromatic substituents including the areas of preference.

Preferred heterocyclyl-substituents and heteroaryl-substituents respectively are pyridinyl, oxazolyl, thiophen-yl, benzofuranyl, benzothiophen-yl, dibenzofuranyl, dibenzothiophenyl, furanyl, indolyl, pyridazinyl, pyrazinyl, imidazolyl, pyrimidinyl and quinolinyl, either unsubstituted or substituted with one, two or three substituents selected from the group consisting of fluorine, C₁-C₈-alkyl, C₁-C₈-perfluoroalkyl, C₁-C₈-alkoxy, C₁-C₈-perfluoroalkoxy, and phenyl.

The definitions given above, including their areas of preference, also apply analogously to **heterocyclo-diyl** and **heteroaryl-diyl** substituents and **heterocyclylium and heteroarylium cations.**

As used herein, and unless specifically stated otherwise, **alkyl, alkane-diyl and alkanetriyl** are straight-chained, cyclic either in part or as a whole, branched or unbranched.

The term **C₁-C₁₈-alkyl** indicates that the straight-chained, cyclic either in part or as a whole, branched or unbranched alkyl substituent contains from 1 to 18 carbon atoms excluding the carbon atoms of optionally present substituents to the C₁-C₁₈-alkyl substituent. The same analogously applies to **alkyl, alkane-diyl and alkane-triyl** and further substituents having an indicated number of carbon atoms.

Specific examples of C₁-C₄-alkyl are methyl, ethyl, n-propyl, isopropyl, n-butyl, tert-butyl. Additional examples for C₁-C₈-alkyl are n-pentyl, cyclohexyl, n-hexyl, n-heptyl, n-octyl, isooctyl. Additional examples for C₁-C₁₈-alkyl are norbornyl, adamantyl, n-decyl, n-dodecyl, n-hexadecyl, n-octadecyl.

Specific examples of C₁-C₈-alkane-diyl-substituents are methylene, 1,1-ethylene, 1,2-ethylene, 1,1-propylene, 1,2-propylene, 1,3-propylene, 1,1-butylene, 1,2-butylene, 2,3-butylene and 1,4-butylene, 1,5-pentylene, 1,6-hexylene, 1,1-cyclohexylene, 1,4-cyclohexylene, 1,2-cyclohexylene and 1,8-octylene.

Specific examples of C₁-C₄-alkoxy-substituents are methoxy, ethoxy, isopropoxy, n-propoxy, n-butoxy and tert-butoxy. An additional example for C₁-C₈-alkoxy is cyclohexyloxy.

As used hereinabove, **C₁-C₈-haloalkyl** and **C₁-C₈-haloalkoxy** are **C₁-C₈-alkyl** and **C₁-C₈**-**alkoxy** sustituents which are once, more than once or fully substituted by halogen atoms. Substituents which are fully substituted by fluorine are referred to as **C₁-C₈-perfluoroalkyl** and **C₁-C₈-perfluoroalkoxy, respectively.**

Specific examples of C₁-C₈-haloalkyl-substituents are trifluoromethyl, 2,2,2-trifluoroethyl, chloromethyl, fluoromethyl, bromomethyl, 2-bromoethyl, 2-chloroethyl, nonafluorobutyl and n-perfluorooctyl.

In a preferred embodiment An denotes perchlorate, hexafluorophosphate, tetrafluoroborate, methanesulfonate (mesylate), p-methylphenylsulfonate (tosylate), trifluoromethylsulfonate (triflate) and trifluoroacetate and 3 An together denote citrate, whereby methanesulfonate (mesylate) and trifluoromethanesulfonate (triflate) are more preferred.

According to the inventive process at least two compounds of formula (I) comprising at least two different rare earth elements M are employed in the process.

In one embodiment the compounds of formula (I) are selected that the mixture of compounds of formula (I) comprises either two, three, four, five, six, seven, eight, nine, ten, eleven, twelve, thirteen, fourteen, fifteen, sixteen or seventeen different rare earth elements M.

The compounds of formula (I) are reacted with compounds of formula (II)

Cat₂(MetSₓO(₄₋ₓ)) (II)

Where Cat is a monocation in a preferred embodiment denotes an alkali metal ion, such as lithium, sodium, potassium, rubidium and cesium, preferably sodium or potassium, or is an ammonium ion or a primary, secondary, tertiary or quaternary organic ammonium ion, in particular those of formula [N(C₁-C₁₈-alkyl)ₛHₜ]⁺ wherein s is 1, 2, 3 or 4 and t is (4-s), or is a guanidinium ion or an substituted guanidinium ion ⁺NHR⁶=C[N(C₁-C₁₈-alkyl)_{y}H_{z}]₂ wherein y is independently from the other y and each other either 1 or 2 and z is (2-y) and R⁶ denotes hydrogen or C₁-C₁₈-alkyl, or is a phosphonium ion [PR⁷]₄⁺, wherein R⁷ denotes alkyl or aryl, preferably aryl such as phenyl; or is a heterocyclylium cation, for example pyrimidinium or is heteroarylium, for example pyridinium.

Where Cat₂ is a dication in a preferred embodiment denotes an primary, secondary, tertiary or quaternary organic diammonium ion, in particular those of formula ⁺[N(C₁-C₁₈-alkyl)ₛHₜ]-R⁸-[N(C₁-C₁₈-alkyl)ₛHₜ]⁺ wherein s is 0, 1, 2 or 3 and t is 3-s or is a heteroarylium dication, for example bi-pyridinium.

In a preferred embodiment Cat denotes a quaternary organic ammonium ion whereby tetraethylammonium is preferred.

In another preferred embodiment (MetSₓO₍₄₋ₓ₎) as a whole denotes tetrathiomolybdate MoS₄²⁻ or tetrathiotungstate WS₄²⁻, whereby tetrathiotungstate WS₄²⁻ is preferred.

Step 1) of the process is carried out in the presence of at least one organic donor solvent preferably a donor solvent capable of coordinating to rare earth metal ions M.

Suitable organic donor solvents include alcohols, for example methanol, ethanol, isopropanol, n-propanol, n-butanol, 2-butanol, n-pentanol, n-hexanol and cyclohexanol; ethers, for example diethyl ether, tert-butyl methyl ether, dioxane, tetrahydrofuran, tetrahydropyran, 1,1-dimethoxymethane, 1,2-dimethoxyethane, diethylene glycol dimethyl ether, tetraethylene gycol dimethyl ether; nitriles, for example acetotonitrile, benzonitrile and benzylnitrile; isonitriles for example cyclonhexylisonitrile; amines, for example diethylamine, trimethylamine, tri-n-propylamine, di-n-propylamine, diisopropylamine, triisopropylamine, piperidine and pyrrolidine; amides, for example formamide, acetamide, and dimethylacetamide; esters, for example acetic acid methyl ester and acetic acid ethyl ester, heteroaryls, for example pyridine, 2-, 3- or 4-methylpyridine, imidazole, 1-methylimidazole, pyrimidine, pyrrole and chinoline and any mixture of aforementioned solvents or solvent types.

Preferred organic donor solvents are nitriles, for example acetonitrile, benzonitrile and benzylnitrile, whereby acetonitrile is preferred.

In one embodiment the compounds of formula (I) are reacted with compounds of formula (II) in solution.

As used herein "in solution" means that either compounds of formula (I) or the compounds of formula (II) or all compounds of formulae (I) and (II) are provided as solutions to be reacted.

"In solution" further means that the compounds of the solution are at least substantially, for example to at least 95 wt-%, preferably 98 wt-%, for example are fully dissolved.

The solvent to produce the solution may be the at least an organic donor solvent either neat or in combination with another organic solvent such as aliphatic hydrocarbons, for example pentane, hexane, heptane, octane and long-chain unbranched or branched aliphatic hydrocarbons, cyclohexane, methylcyclohexane, petroleum ether having different boiling ranges and paraffin oils, aromatic hydrocarbons, for example benzene, toluene, o-, m- or p-xylene and mesitylene, and aromatic chlorohydrocarbons such as chlorobenzene or the isomeric chlorotoluenes, sulfones like dimethylsulfone, tetramethylene sulfone and also any mixture of such solvents.

In another embodiment the compounds of formula (I) are reacted with compounds of formula (II) without being in solution. In this embodiment the compounds are reacted in the presence of the organic donor solvent either neat or in combination with another organic solvent such as those mentioned above or any mixture thereof. While the reaction proceeds compounds of formulae (I) and (II) are dissolving while the precipitates are formed simultaneously or after dissolution. The presence of water is in principle possible but adds no advantage. In one embodiment of the invention the water content of the solvent is therefore less than 20 wt.-%, preferably less than 5 wt.-% and even more preferably less than 0.5 wt.-%.

The molar ratio of compounds of formula (II) to compounds of formula (I) is for example in the range of from 1 to 1000, preferably 2.8 to 12.0 and more preferably 3.0 to 5.0. A further excess of compounds of formula (II) are possible but add no advantage. The amount of organic donor solvents to be applied in step 1) is dependent on the type, solubility and amount of compounds of formula (I) and may be determined by one skilled in a very few orienting examples. For example the amount of organic donor solvent may be chosen to be in the range of 1 to 1000, preferably in the range of 3 to 1000 times with respect to the molar ratio of organic donor solvent and compounds of formula (I).

The reaction temperature in step 1) is not critical and may be in the range of from the freezing point of the solvent to its boiling point or the boiling point of the lowest component thereof. In one embodiment the reaction temperature is in the range of from -40 °C to 100 °C, preferably -35° to 60 °C and more preferably 0° to 50 °C. The reaction pressure in step 1) is not critical and may be for example in the range of 500 hPa to 10 MPa, preferably the process is carried out under ambient pressure.

Upon reaction of compounds of formula (I) with compounds of formula (II) in the presence of an organic donor solvent compounds comprising the structural elements of formula (III) and/or (IV) and/or (V) are formed and the least soluble ones typically form the precipitates as outlined in the summary of the invention. To aid precipitation cooling or partial removal of solvents in usual manner e.g. by applying a vacuum can be performed.

As an alternative, solvents in which the compounds comprising the structural elements of formula (III) and/or (IV) and/or (V) are less soluble may be added to fulfil the same purpose.

It is a major finding of the invention that the solubility of the rare earth metal thiolates comprising the structural units according to formulae (III) to (V) obtained in step 1) of the inventive process differ substantially and by around an order of magnitude depending on the oxidation state for Europium, Ytterbium, Samarium, Thulium and Dysprosium being either (+II) or (+III) and/or which type rare earth element M is employed in combination with which thiometallates.

Compounds where M is La, Ce, Pr, Pm, Nd or Sm were found to form compounds comprising the structural units of formula (V), a dimeric structure.

Compounds of rare earth elements M being Sc, Y, Nd, Sm, Gd, Tb, Dy, Ho, Er, Tm, Yb or Lu in the oxidation state (+III) were found to form compounds comprising the structural units of formula (IV), in particular where Met is W, as does Europium in the oxidation state (+III).

Compounds of Europium, Ytterbium, Samarium, Thulium and Dysprosium in the oxidation state (+II) form compounds comprising the structural units of formula (III) having a polymeric structure.

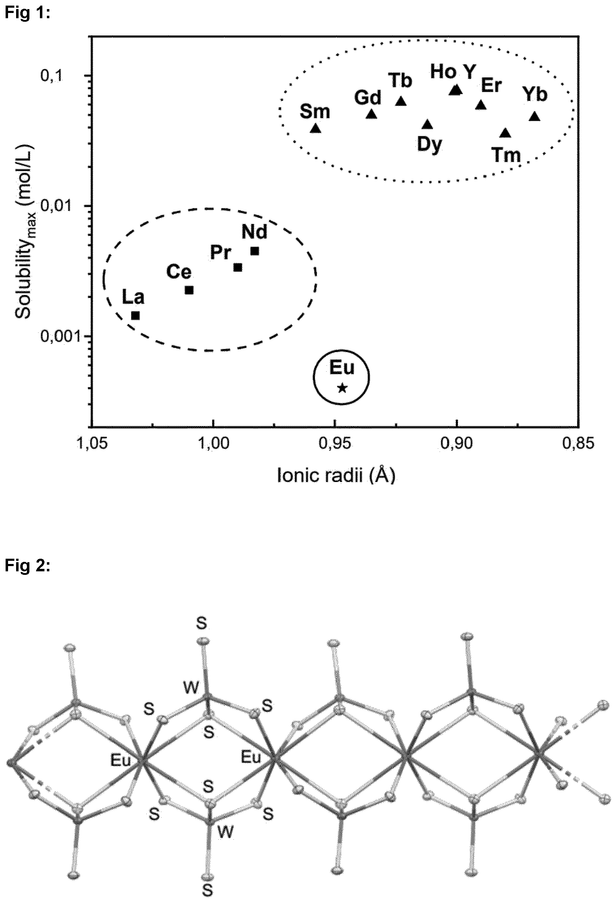

This special coordination and redox behavior makes the inventive compounds perfectly suitable for separation by precipitation in particular crystallization. An overview of solubilities is given in Figure 1 for the respective thiotungstates (WS₄²⁻).

Without wanting to be bound by theory the Europium compounds comprising the structural element of formula (III) are formed upon the internal reduction of Europium(III) to Europium(ll) by a sulfur atom of the thiometallates. The required electron transfer can be for example be triggered by temperatures above -20°C or by exposure of the reaction mixture in step 1) to light, whereby ambient daylight is sufficient. As a consequence a coordination polymer with the Europium centers being coordinated just by the sulfur donors of the thiometallates is formed as can be seen in the crystallographic structure of figure 2. If the same reaction is carried out at temperatures lower than - 30°C and under exclusion of light for the reduction of Europium(III) is not observed immediately and compounds comprising the structural element of formula (IV) are formed like for all other rare earth elements.

It is apparent to those skilled in the art that the reduction of Europium (III) to Europium (II) does not take place at a certain temperature but is time and temperature dependent following certain kinetics meaning that reduction could also be observed at lower temperatures upon longer storage. However the above temperatures were confirmed for reaction times of several hours.

In one embodiment the reduction of Ytterbium, Samarium, Thulium and Dysprosium to their oxidation state (+II) also leads to formation of compounds comprising the structural units of formula (III). Such conditions could for example include irradiation with UV-Light, in particular for Ytterbium, or addition of a reducing agent such as cobaltocene or decamethylcobaltocene or a reducing metal like zinc or tin, or a reducing gas like dihydrogen. Alternatively the reduction may be accomplished electrochemically by applying a sufficient potential, preferably while not consuming a sacrificial reducing agent.

Since the separation process not only allows easy separation of compounds of different rare earth elements M, but in particular even more easy separation of groups of rare earth elements M due the aforementioned different complexation and redox behavior in one preferred embodiment the at least two compounds of formula (I) comprising at least two different rare earth elements M are selected from at least two different of the three groups wherein in

| | |
|---|---|
| Group A: | M is La, Ce, Pr, Pm, Nd or Sm |
| Group B: | M is Eu, Yb, Sm, Tm, Dy |
| Group C: | M is Sc, Y, Nd, Sm, Gd, Tb, Ho, Er,or Lu |

in particular and more preferably where Met is W.

This preferred embodiment is in particular preferred where step 1) of the process according to the invention is carried out while or before reducing Ytterbium and/or Samarium and/or Dysprosium and/or Europium, i.e. by applying reductive conditions as described above.

For this preferred embodiment the compounds of formula (I) are in one exemplary embodiment selected such that they, taken in total, comprise either one, two, three, four or all five of the rare earth elements M of Group A) and one, two, three, four or all five of the rare earth elements M of Group B). In this embodiment the process allows in particular to separate the thiometallates of Group A) elements M from thiometallates of Group B) elements M.

For the above preferred embodiment the compounds of formula (I) are in another exemplary embodiment selected such that they, taken in total, comprise either one, two, three, four, five, six or all seven of the rare earth elements M of Group C) and one, two, three, four or all five of the rare earth elements M of Group B). In this embodiment the process allows in particular to separate the thiometallates of Group C) elements M from thiometallates of Group B) elements M.

For the above preferred embodiment the compounds of formula (I) are in yet another exemplary embodiment selected such that they, taken in total, comprise either one, two, three, four or all five of the elements M of Group A), and either one, two, three, four or all five of the rare earth elements M of Group B) and either one, two, three, four, five, six or all seven of the rare earth elements M of Group C). In this embodiment the process allows in particular to separate the thiometallates of Group C) elements M from thiometallates of Group B) elements M and thiometallates of Group A) elements M.

Since the process also allows separation of different rare earth elements M within Group A) or within Group B) or within Group C) this separation could optionally form part of a second step once the compounds comprising rare earth elements M of Group A) or the compounds comprising rare earth elements M of Group C) are separated from compounds comprising rare earth elements M of Group B) in a first step.

Since the process also allows separation of different elements M within Group A) or within Group C) this separation could optionally, if desired, form part of a third step to obtain the single compounds of elements M of Group A) and/or Group C).

In another preferred embodiment the at least two compounds of formula (I) comprising at least two different rare earth elements M are selected from at least two different of the three groups wherein in

| | |
|---|---|
| Group A: | M is La, Ce, Pr, Pm or Nd |
| Group B: | M is Eu |
| Group C: | M is Sc, Y, Gd, Tb, Ho, Er, Tm, Yb, Sm, Dy or Lu |

in particular and more preferably where Met is W.

This preferred embodiment is in particular preferred where step 1) of the process according to the invention is carried without reducing Ytterbium and/or Samarium and/or Dysprosium but using the auto reduction observed and described for Europium above. For this alternative preferred embodiment the compounds of formula (I) are in one exemplary embodiment selected such that they, taken in total, comprise either one, two, three, four or all five of the rare earth elements M of Group A) and Europium of Group B). In this embodiment the process allows in particular to separate the thiometallates of Group A) elements M from Europium(II)thiometallates.

For the above alternative preferred embodiment the compounds of formula (I) are in another exemplary embodiment selected such that they, taken in total, comprise either one, two, three, four, five, six, seven, eight, nine, ten or all eleven rare earth elements M of Group C) and Europium of Group B). In this embodiment the process allows in particular to separate the thiometallates of Group C) elements M from Europium(II) thiometallates.

For the above alternative preferred embodiment the compounds of formula (I) are in yet another exemplary embodiment selected such that they, taken in total, comprise either one, two, three, four or all five of the elements M of Group A), and Europium of Group B) and either one, two, three, four, five, six, seven, eight, nine, ten or all eleven of the rare earth elements M of Group C). In this embodiment the process allows in particular to separate the thiometallates of Group C) elements M from thiometallates of Group A) elements M and Europium(II) thiometallates.

Since the process also allows separation of different rare earth elements M within Group A) or within Group C) this separation could optionally form part of a further step once the thiometallates of Group A) elements M and/or thiometallates of Group C) elements M are separated from Europium(II) thiometallates in one or two previous steps.

Compounds comprising the structural units of formula (III) include those of formula (Illa):

Cat₂[M^{II}(MetS₄)₂]ₙ (IIIa)

wherein Cat, M and Met have the meaning including its preferential meanings set forth for formula (III) above and n denotes an integer of larger than 1 indicating a polymeric structure.

Specific compounds of formulae (III) and (Illa) are: [NEt₄]₂[Eu^{II}(WS₄)₂] ▪ 2(MeCN); [NEt₄]₂[Yb^{II}(WS₄)₂] ▪ 2(MeCN), [NEt₄]₂[Sm^{II}(WS₄)₂] ▪ 2(MeCN) and [NEt₄]₂[Dy^{II}(WS₄)₂] ▪ 2(MeCN).

Specific compounds comprising the structural units of formula (IV) include those of formula (IVa):

Cat₃[M^{III}L_{z}(MetS₄)₃] (IVa)

wherein Cat, M, Met, L and z have the meaning including its preferential meanings set forth for formula (IV) above.

Specific compounds of formulae (IV) and (IVa) are:
[NEt₄]₃[Sm^{III}(MeCN)₂(WS₄)₃], [NEt₄]₃[Gd^{III}(MeCN)₂(WS₄)₃], [NEt₄]₃[Y^{III}(MeCN)(WS₄)₃] [NEt₄]₃[Tb^{III}(MeCN)(WS₄)₃], [NEt₄]₃[Dy^{III}(MeCN)(WS₄)₃], [NEt₄]₃[Ho^{III}(MeCN)(WS₄)₃], [NEt₄]₃[Er^{III}(MeCN)(WS₄)₃], [NEt₄]₃[Tm^{III}(MeCN)(WS₄)₃], [NEt₄]₃[Yb^{III}(MeCN)(WS₄)₃] and [NEt₄]₃[Lu^{III}(MeCN)(WS₄)₃], [NEt₄]₃[Sc^{III}(WS₄)₃], [NEt₄]₃[Ho^{III}(MeCN)(MoS₄)₃], [NEt₄]₃[Er^{III}(MeCN)(MoS₄)₃], [NEt₄]₃[Yb^{III}(MeCN)(MoS₄)₃] and [NEt₄]₃[Y^{III}(MeCN)(MoS₄)₃].

Specific compounds comprising the structural units of formula (V) include those of formula Va):

Cat₆[M^{III}(MetS₄)₃]₂ (Va)

wherein Cat, M and Met have the meaning including its preferential meanings set forth for formula (V) above.

Specific compounds of formulae (V) and (Va) are:
[NEt₄]₆[La^{III}(WS₄)₃]₂, [NEt₄]₆[Ce^{III}(WS₄)₃]₂, [NEt₄]₆[Pr^{III}(WS₄)₃]₂, [NEt₄]₆[Pm^{III}(WS₄)₃]₂, , [NEt₄]₆[Nd^{III}(WS₄)₃]₂ and [NEt₄]₆[Sm^{III}(MoS₄)₃]₂.

For the avoidance of doubt the above nomenclature for compounds of formulae (Illa), (IVa), (IVb) and (Va) as well as the listed single compounds include the compounds as given in the formula as well as compounds having additional solvent molecules in their crystallized form.

In step 2) the precipitate formed in step 1) is separated from the residual solution. Such separation can be accomplished by any manner and in any vessel known to those skilled in the art for that purpose. This includes sedimentation and decantation, centrifugation and filtration.

Due to the unique separation efficiency in a single step, the process according to the invention is in particular suitable to form part of a process wherein the thiometallates are recycled and marketable commodity compounds of REEs are prepared.

Therefore the separation process may further contain a further step
3) reacting the compounds comprising the structural elements of formulae (III) or (IV) or (V) with at least one compound of formula (VI)

Cat₂An² (VI)

wherein Cat denotes a monocation as defined above, preferably ammonium an
An² denotes oxalate, carbonate, sulfate or two equivalents of hydroxide or hydrogen carbonate, preferably oxalate
thereby obtaining compounds of formulae (VII) from compounds comprising the structural element of formula (III)

   MAn² (VII)
or compounds of formulae (VIII) from compounds comprising the structural element of formulae (IV) or (V)

   M₂An²₃ (VIII)

   wherein M has the same meaning including its area of preference as defined for formula (I). Where compounds comprising the structural element of formulae (IV) or (V) are obtained as a solution, step 3) may be preceded by removal of the solvent e.g. by distillation or evaporation or by addition of a solvent wherein such compounds are less soluble to aid precipitation.

Step 3) may be carried out in water.

Specific compounds of formula (VI) are ammonium oxalate, sodium oxalate and potassium oxalate, whereby ammonium oxalate is preferred.

A specific compound of formula (VII) are Europium(II)oxalate.

Specific compounds of formula (VIII) are Scandium(III)oxalate, Yttrium(III)oxalate, Scandium(III)oxalate, Lanthanum(III)oxalate, Cerium(III)oxalate, Praeseodymium(III)-oxalate, Neodymium(III)oxalate, Promethium(III)oxalate, Samarium(lll)oxalate, Gadolinium(III)oxalate, Terbium(III)oxalate, Dysprosium(III)-oxalate, Holmium(III)-oxalate, Erbium(III)oxalate, Thulium(III)oxalate, Ytterbium(III)oxalate and Lutetium(III)-oxalate.

By performing step 3) compounds of formula (II) are recovered and may be recycled into in step 1) either directly or after changing the cation by known methods.

The compounds of formulae (VII) and (VIII) may be converted to common rare earth metal oxides by step
4) calcinating compounds of formula (VII) or (VIII) at a temperature of 500°C or more, preferably between 500 and 1200°C , more preferably between 600° and 1000°C.

The process according to the invention is suitable in all processes where separation or purification of REEs is important. This includes recycling processes for electronic materials, REE separation from mixed REE concentrates which are typically mixed oxides obtained from REE ores or extraction of other sources of REEs such as coal ashes and ashes obtained by burning electronic waste or waste comprising electronic components, as well as the separation of REEs from actinides in the workup of used nuclear fuels.

Irrespective of the aforementioned processes, compounds of formula (I) may be obtained according to standard procedures known to those skilled in the art.

In a specific embodiment the compounds of formula (I) are obtained by
i) reacting materials comprising rare earth metal compounds with acids of formula (IX)

   Hₘ-An³ₘ (IX)

   wherein An³ₘ as a whole is a m-valent anion and m is 1, 2 or 3
   in water to form aqueous solutions of compounds of formula (I)
ii) optionally separating the aqueous solutions of compounds of formula (I) from remaining solids
iii) optionally exchanging the m-valent anion An³ₘ by an anion An as defined above and preferably as defined above as specific and preferred embodiment
iv) drying
whereby the sequence of optional steps 2) and 3) may be changed.

The optional step of separating the aqueous solutions of compounds of formula (I) from remaining solids may be accomplished e.g. by filtration, centrifugation, decantation or any other method known to those skilled in the art for that purpose.

The optional step of exchanging anions may be accomplished e.g. by anion exchange on anion exchange resins, by anion exchange utilizing different salt solubilities or any other method known to those skilled in the art for that purpose.

As used herein above materials comprising rare earth metal compounds encompass rare earth element ores like for example Monazite, Bastnäsite, Synchisite, Gadolinite, Samarskite, Euxenite, Pyrochlore or mixtures thereof.

Other examples include rare earth metal concentrates such as mixed rare earth metal oxides, carbonates or hydroxides.

Further examples include electronic waste materials such as for example large and small appliances, screens and monitors, telecommunication devices such as computers and mobile phones, magnets, fluorescent lamps, whereby screens, monitors and fluorescent lamps are preferred.

A major advantage of the present invention is the possibility to separate rare earth metal compounds by an easy and efficient process without the necessity of harsh conditions, numerous chemicals or process steps.

In the following, the present invention is illustrated by examples which however are not intended to limit the scope of invention.

### Experimental section:

### I Chemicals and Methods

### 1 General

Unless stated otherwise, syntheses were carried out under strict inert Argon atmosphere using Schlenk techniques or inside Vigor^{®} gloveboxes. Diethyl ether and acetonitrile were dried using a Vigor^{®} solvent purification system. Diethyl ether was additionally dried over potassium/benzophenone, distilled, degassed by three freeze-pump-thaw cycles and stored over 4 Å molecular sieves for at least three days prior to use. Likewise, acetonitrile was degassed by three freeze-pump-thaw cycles and stored over 3 Å molecular sieves prior to use.

Tungstic acid H₂WO₄ was purchased from Fluka. Europium(III)oxide Eu₂O₃ was purchased from Sigma-Aldrich and Yttrium(lll)oxide Y₂O₃ from Ventron. Ammonium thiotungstate (NH₄)₂WS₄ and Tetraethylammonium tetrathiotungstate (NEt₄)₂[WS₄] and tetrathiomolybdate (NEt₄)₂[MoS₄] were synthesized according to [13] McDonald, J. W.; Friesen, G. D.; Rosenhein, L. D.; Newton, W. E., Syntheses and characterization of ammonium and tetraalkylammonium thiomolybdates and thiotungstates. Inorganica Chim. Acta 1983, 72, 205-210.

### 2 Analytics

X-ray Crystallography data was detector using MoKa radiation (λ = 0.71073 Å) or CuKa radiation (λ = 1.54184 Å) at 100 K. After data collection, structures were solved by intrinsic phasing (SHELXT) and refined by full- matrix least-squares procedures on F² using SHELXL in the olex2 program suite [14] G. M. Sheldrick, Acta Cryst., 2015, 71, 3-8. 7., [15] G. M. Sheldrick, Acta Cryst., 2008, 64, 112-122. All non-hydrogen atoms were refined with anisotropic displacement parameters. The hydrogen atoms were placed in positions of optimized geometry.

NMR spectra were recorded on a 200 MHz Bruker Avance spectrometer.

UV-Vis electronic absorption data were collected on an Agilent Cary 60 UV-Vis Spectrophotometer, which was connected to a sampling probe (d=2 mm) inside the Glovebox with an optical fiber. Maximum solubility was determined using UV-Vis spectroscopy, by fitting the absorbance of a saturated solution with a calibration curve.

Raman Spectroscopy spectra were collected using a Thermo Scientific DXR SmartRaman spectrometer and data were processed with the OMNIC software. Measurements were realized at a fixed power (10 mW) under irradiation at 532 nm with a 50 µm slit aperture.

Elemental analyses were carried out in the Mikrolabor of ETH Zürich on a LECO TruSpec^{®} Micro spectrometer.

X-ray photoelectron spectroscopy (XPS) was performed on a Sigma 2 instrument (Thermo Fisher Scientific) equipped with an UHV chamber (non-monochromatic 200 W Al Kα source, a hemispherical analyzer, and a seven channel electron multiplier). The C 1s peak of adventitious carbon was set at 284.8 eV to compensate for any charge induced shifts.

XPS data was analyzed using CasaXPS software. Quantification of the Eu/Y At% were obtained by fitting the data with a Linear Baseline for the Eu 3d region between 1132 and 1112 eV and for the Y 3p region between 318 and 308 eV.

### 3 Examples

### Example 1: Synthesis of (NH₄)₂WS₄:

H₂WO₄ (10 g, 40 mmol) was treated with aqueous ammonia NH₃ (25 wt-%, 80 mL), and the solution was saturated with an excess of H₂S. H₂S was generated in situ from iron(ll) sulfide (FeS) and 1 M sulfuric acid (H₂SO₄) using a Kipp's apparatus. Evolution of toxic H₂S gas was quenched using gas-wash bottles filled first with sodium hypochlorite and secondly with 1 M potassium hydroxide (KOH).

After 1 h of stirring and color changes from pale white over lime-green to bright green, the solution was heated gradually to 55 °C over a period of 1 h, cooled down to room temperature, and stirred overnight. After that time the formation of a yellow solid was observed. The solid product was isolated by filtration, washed with isopropanol (3 × 25 mL) and diethyl ether (3 × 25 mL), and dried in vacuo to give a yellow powder (10.12 g, 29.1 mmol, yield: 71% of theory).

Elemental analysis found (calculated) % for H₈N₂WS₄: H, 2.38 (2.32); N, 8.24 (8.05).

UV spectrum (H₂O) λₘₐₓ (nm)(ε (M⁻¹cm⁻¹)): 393 (15 000), 278 (22 900), 216 (28 000).

### Example 2: Synthesis of (NEt₄)₂WS₄:

(NH₄)₂WS₄ prepared in example 1 (4.9 g, 14 mmol) was dissolved in tetraethylammonium hydroxide NEt₄OH (25 wt-% in H₂O, 16 mL) and degassed H₂O (20 mL) was added. The solution was subjected to pumping for 2 h, before isopropanol (150 mL) was added, and the bright yellow precipitate was allowed to settle at 0 °C. The supernatant was removed by cannula filtration and the solid was washed with isopropanol (2 × 50 mL) and diethyl ether (2 × 50 mL), and dried in vacuo overnight. The crude product was extracted with acetonitrile (MeCN) and dried in vacuo overnight, yielding bright yellow crystals (6.06 g, 10.6 mmol, yield: 75% of theory).

Elemental analysis found (calculated) % for C₁₆H₄₀N₂WS₄: C, 33.60 (33.56); H, 7.03 (7.04); N, 5.10 (4.89).

UV spectrum (MeCN) λₘₐₓ (nm)(ε (M⁻¹cm⁻¹)) : 399 (18 700), 283 (24 700), 223 (28 100).

### Example 3: Synthesis of Europium(III) triflate Eu(OTf)₃:

The synthesis was performed under aerobic conditions in a well-ventilated fumehood. In a 100 mL round-bottomed flask, miliQ water H₂O (2 mL) was added by syringe to anhydrous trifluoromethanesulfonic acid (2 mL) at 0 °C. The reaction was stirred until fuming stopped. Afterwards, Europium(III)oxide Eu₂O₃ (5.73 mmol) was added portion wise under strong stirring, and the suspension was heated at 110 °C for 2 h. The reaction was allowed to cool down to room temperature and diluted with water (50 mL). Filtration of the supernatant with Acrodisc^{®} Syringe Filters (0.2 µm, 13 mm) resulted in a clear and colorless solution which was dried under vacuum to afford a white powder. The triflates were dried under vacuum (1 Pa) at 170°C for 24 h prior to use (yield: quantitative). ¹⁹F NMR (282 MHz, D₂O): d [ppm] -78.84 (s).

### Example 4: Synthesis of Yttrium(III) triflate Y(OTf)₃:

The synthesis was performed under aerobic conditions in a well-ventilated fumehood. In a 100 mL round-bottomed flask, miliQ water H₂O (2 mL) was added by syringe to anhydrous trifluoromethanesulfonic acid (2 mL) at 0 °C. The reaction was stirred until fuming stopped. Afterwards, Yttrium(III)oxide Y₂O₃ (5.73 mmol) was added portion wise under strong stirring, and the suspension was heated at 110 °C for 2 h. The reaction was allowed to cool down to room temperature and diluted with water (50 mL). Filtration of the supernatant with Acrodisc^{®} Syringe Filters (0.2 µm, 13 mm) resulted in a clear and colorless solution which was dried under vacuum to afford a white powder. The triflates were dried under vacuum (1 Pa) at 170°C for 24 h prior to use

¹⁹F NMR (282 MHz, D₂O): d [ppm] -78.8 (s).

### Example 5: Synthesis of [NEt₄]₂[Eu^{II}(WS₄)₂]▪2(MeCN)

In a 25 mL scintillation vial, (NEt₄)₂WS₄_prepared in example 2 (100 mg, 0.174 mmol, 3 equivalents) was solubilized in 5 mL of MeCN resulting in a bright yellow solution. The latter was treated with Eu(OTf)₃ prepared in example 3 (34.8 mg, 0.058 mmol, 1 equivalent) resulting in an immediate color change to dark red greenish solution. After one hour a golden brown precipitate was already visible. The reaction was stirred at room temperature for 24 h, before the solution was filtered on a porcelain 4 frit resulting in a golden brown powder which was further dried under vacuum (69,7 mg, 0.062 mmol, yield: 100 % of theory).

The crystal structure is shown in figure 2.

### Example 6: Synthesis of [NEt₄]₃[Eu^{III}(MeCN)₂(WS₄)₂]·MeCN

In a 25 mL scintillation vial, [NEt₄]₂[WS₄] prepared in example 2 (100 mg, 0.174 mmol, 3 equivalents) was solubilized in 5 mL of MeCN resulting in a bright yellow solution. The latter was treated with Eu(OTf)₃ prepared in example 3 (31.2 mg, 0.058 mmol, 1 equivalent) resulting in an immediate color change to dark red greenish. The reaction was left to stand at -35 °C for 24 h before it was layered in the dark with pentane (2 mL) and diethyl ether (5 mL) and crystallization was set at -35 °C. After a day, dark red crystals were isolated by pipetting out the supernatant, washed with pentane (2 × 2 mL) and dried under vacuum (90 mg, 0.057, yield: 99 % of theory).

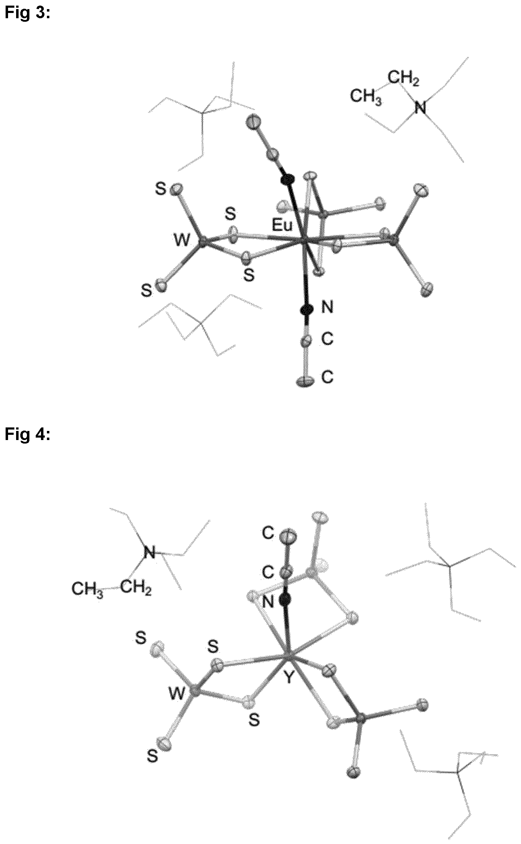

The crystal structure is shown in figure 3.

### Example 7: Synthesis of [NEt₄]₃[Y^{III}(MeCN)₂(WS₄)₂]▪MeCN

In a 25 mL scintillation vial, [NEt₄]₂[WS₄] prepared in example 2 (100 mg, 0.174 mmol, 3 equivalents) was solubilized in 5 mL of MeCN resulting in a bright yellow solution. The latter was treated with Y(OTf)₃ prepared in example 4 (31.2 mg, 0.058 mmol, 1 equivalent) resulting in an immediate color change to bright orange. The reaction was stirred at room temperature for 24 h before it was layered with pentane (2 mL) and diethylether (5 mL) and crystallization was set at -35 °C. After a day, red crystals were isolated by pipetting out the supernatant, washed with pentane (2 × 2 mL) and dried under vacuum (82 mg, 0.056, yield: 97 % of theory).

The crystal structure is shown in figure 4.

### Example 8: Synthesis of [NEt₄]₆[La^{III}(WS₄)₃]₂ ; [NEt₄]₃[M^{III}(MeCN)₂(WS₄)₃] (M=Sm and Gd) and [NEt₄]₃[M(MeCN)(WS₄)₃] (M=Tb-Yb and Y)

In a 20 mL scintillation vial, (NEt₄)₂WS₄ (100.0 mg, 0.18 mmol, 3 equivalents) was solubilized in the minimum of MeCN (ca. 5 mL) under stirring, resulting in a bright yellow solution. Then, M (OTf)₃ (0.06 mmol, 1 equivalentwith M = La, Sm, Gd, Tb-Yd or Y) was added resulting in an immediate color change (light orange for La and Pr, orange for Ce and Nd-Gd, brown for Tb, red for Dy-Tm and Y, dark red for Yb). The reaction mixture was stirred for 2 hours at room temperature before it was crystallized by layering with pentane (2 mL) and Et₂O (10 mL) and crystallization was set at - 35°C. After a day, colored crystals (yellow for La and Pr, brown Ce and Nd, red for Sm-Tm including Y and dark red for Yb) were isolated by pipetting out the supernatant, washed with THF (3 × 2 mL) and Et₂O (2 × 2 mL), and dried under vacuum.

La. Yield: 74.9 mg (88%). ¹⁹F NMR (282 MHz, CD₃CN): no signal. ¹H NMR (200 MHz, CD₃CN): 1.18 to 1.27 ppm (12 H, tt, 7.18, CH₃ of NEt₄), 3.14 to 3.25 ppm (8 H, m, 7.33, CH₂ of NEt₄). UV-Vis (2.48 × 10⁻⁵mol·L⁻¹ in MeCN): 217 nm (57 725 L·mol⁻¹·cm⁻¹), 283 nm (97 848 L·mol⁻¹ ·cm⁻¹), 397 nm (104 823 L·mol⁻¹·cm⁻¹), 444 nm (24 320 L·mol⁻¹·cm⁻¹). Raman (solid): 175 cm⁻¹, 220 cm⁻¹, 468 cm⁻¹, 485 cm⁻¹, 500 cm⁻¹. Raman (in MeCN): 173 cm⁻¹, 219 cm⁻¹, 461 cm⁻¹, 487 cm⁻¹.

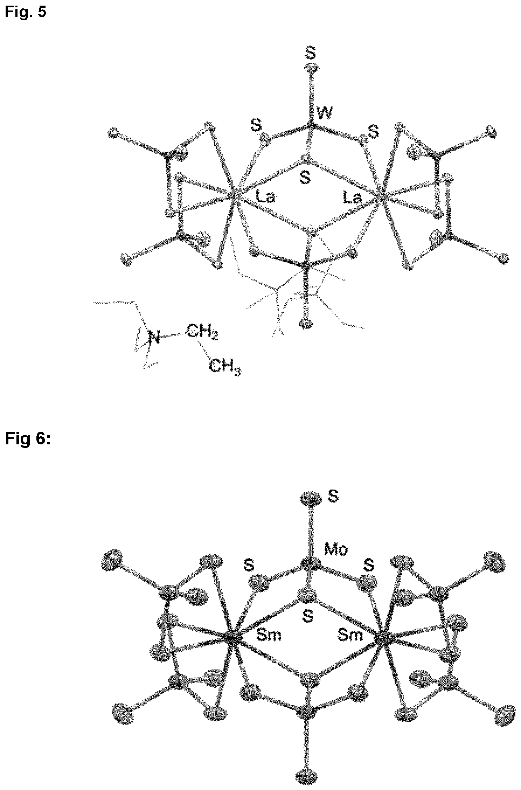

The crystal structure of [NEt₄]₆[La(WS₄)₃] is shown in figure 5.

### Example 9: Synthesis of [NEt₄]₆[Sm^{III}(MoS₄)₃]₂ ; [NEt₄]₃[M^{III}(MeCN)(MoS₄)₃] (for M=Ho, Er, Yb, Y)

In a 20 mL scintillation vial, (NEt₄)₂MoS₄ (100.0 mg, 0.18 mmol, 3 equivalents) was solubilized in the minimum of MeCN (ca. 5 mL) under stirring, resulting in a bright red solution. Then, M(OTf)₃ (0.06 mmol, 1 equivalent with M = La-Yb or Sc or Y) was added resulting in an immediate color change (from dark red for La to dark red-green for Yb). The reaction mixture was stirred for 2 hours at room temperature before it was crystallized by layering with pentane (2 mL) and Et₂O (10 mL) and crystallization was set at - 35°C. Dark red crystals were isolated for M = Sm, Ho, Er, Yb, Y by pipetting out the supernatant, washed with Et₂O (2 × 2 mL), and dried under vacuum.

The crystal structure of [NEt₄]₆[Sm^{III}(MoS₄)₃] is shown in figure 6.

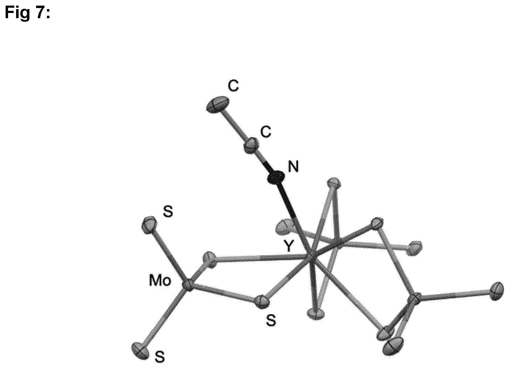

The crystal structure of [NEt₄]₃[Y^{III}(MeCN)(MoS₄)₃] is shown in figure 7.

### Example 10a: Separation of Europium compounds from a mixture comprising Europium and Yttrium compounds using tetrathiotungstate

In a 20 mL scintillation vial, [NEt₄]₂[WS₄] (76.5 mg, 0.133 mmol, 8 equivalents) was solubilized in 5 mL of MeCN resulting in a bright yellow solution. The latter was treated with a mixture of Eu(OTf)₃/Y(OTf)₃ (1:1) (0.016 mmol, 1 equivalent) resulting in an immediate color change to dark red. After one hour a golden-brown precipitate was observed. The reaction was stirred at room temperature for 24 h, before the solution was filtered on a porcelain 4 frit resulting in a golden-brown powder which was further dried under vacuum and a red filtrate which was taken to dryness and both were characterized by X-ray photoelectron spectroscopy. The golden-brown precipitate was found to contain 98.88 Atom-% of Europium tetrathiotungstate and 1.12% of Yttrium tetrathiotungstate, the dried red filtrate contained 5.02 mol-% of Europium tetrathiotungstate and 94.98 mol-% of Yttrium tetrathiotungstate.

### Example 10b: Separation of Europium compounds from a mixture comprising Europium and Yttrium compounds using tetrathiomolybdate

In a 20 mL scintillation vial, [NEt₄]₂[MoS₄] (64.8 mg, 0.133 mmol, 8 equivalents) was solubilized in 5 mL of MeCN resulting in a bright red solution. The latter was treated with a mixture of Eu(OTf)₃/Y(OTf)₃ (1:1) (0.016 mmol, 1 equivalent) resulting in an immediate color change to dark red brownish. After one hour a brown precipitate was observed. The reaction was stirred at room temperature for 24 h, before the solution was filtered on a porcelain 4 frit resulting in a bronze powder which was further dried under vacuum (12.5 mg, 18 wt%) and a dark red filtrate which was taken to dryness (56.5 mg, 82 wt%) and both were characterized by X-ray photoelectron spectroscopy. The bronze precipitate was found to contain 94.97 Atom-% of Europium tetrathiomolybdate and 5.03 % of Yttrium tetrathiomolybdate, the dried red filtrate contained 13.96 mol-% of Europium tetrathiomolybdate and 86.04 mol-% of Yttrium tetrathiomolybdate.

### Example 11: Recovery of lamp phosphor

11a): A compact fluorescent light bulb (Lightway 7 W, 385 Lumens 60 mA, 230 V) was smashed inside a zip lock bag to separate the glass from the bulb socket. The extracted glass (17.1445 g) was mortared into a fine white sand. That powder was then suspended in a 1:2 mixture of trifluoromethanesulfonic acid (2 mL) and water at 0 °C, resulting in an off-white slurry. The suspension was heated at 110 °C for 2 h resulting in a color change to light pink. Water was added (10 mL) and the slurry was stirred for 30 min before being filtered and the filtrate taken to dryness at 200 °C for 25 h (0.568 g, 3.3 wt%) to obtain a powder.

11b): A compact fluorescent light bulb (PHILIPS Genie 14 W energy saver 230-240 V) was smashed inside a zip lock bag to separate the glass from the bulb socket. The extracted glass (21.150 g) was mortared into a fine white sand. That powder was then suspended 5 in a 1:2 mixture of trifluoromethane sulfonic acid (2 mL) and water at 0 °C, resulting in an off-white slurry. The suspension was heated at 110 °C for 2 h resulting in a color change to light pink. Water was added (10 mL) and the slurry was stirred for 30 min before being filtered and the filtrate taken to dryness at 200 °C for 25 h to obtain a powder (1.2275 g, 5.8 wt%)

### Example 12: Recovery of Europium from lamp phosphor

In a 25 mL scintillation vial, [NEt₄]₂[WS₄] (0.500 g, 0.87 mmol) was solubilized in 20 mL of MeCN resulting in a bright yellow solution. To the latter the lamp phosphor powder obtained in example 11a) (0.200 g) was added which resulted in an immediate color change to dark red. After one hour a golden-brown precipitate was observed. The reaction was stirred at room temperature for 24 h, before the solution was filtered on a porcelain 4 frit resulting in a golden-brown powder which was further dried under vacuum (24.6 mg, 12 wt%) and a red filtrate which was taken to dryness (659.4 mg, >3wt% loss).

The golden-brown precipitate was found to contain 71.31 Atom-% of Europium tetrathiotungstate and 28.69 Atom-% of Yttrium tetrathiotungstate, the dried red filtrate contained no detectable trace of Europium tetrathiotungstate and 100 Atom-% of Yttrium tetrathiotungstate.

## Claims

1. A process for the separation of rare earth element compounds comprising at least the steps of
1) Reacting a mixture of at least two compounds of formula (I) comprising at least two different rare earth elements M
MAn₃ (I)
wherein
M denotes a rare earth metal ion in the oxidation state (+III) selected from the group consisting of: Sc, Y, La, Ce, Pr, Nd, Pm, Sm, Eu, Gd, Tb, Dy, Ho, Er, Tm, Yb and Lu, preferably Y, La, Ce, Pr, Nd, Sm, Eu, Gd, Tb, Dy, Ho, Er, Tm, Yb and Lu.
An denotes an monoanion or 2 An together denote a dianion or 3 An together denote a trianion
with compounds of formula II
Cat₂(MetSₓO(₄₋ₓ)) (II)
wherein
Cat is a monocation or Cat₂ as a whole is a dication
Met is W or Mo, preferably W
x is 1, 2, 3 or 4, preferably 2, 3 or 4, more preferably 4 in the presence of at least one organic donor solvent, preferably at least one organic donor solvent capable of coordinating to rare earth metal ions M thereby forming a precipitate and
2) separating the precipitate formed in step 1) from the residual solution.

2. The process according to claim 1, wherein
An represents a monoanion selected from the group consisting of: nitrate, sulfate, chloride, bromide, iodide, thiocyanate, perchlorate, hexafluorophosphate, tetrafluoroborate, phosphate, phosphonates R¹PO₃²⁻, hydrogen phosphonates R¹PO₃H⁻; organophosphinates R₂¹PO₂⁻ or R¹PO₂H⁻ , sulfonates R¹SO₃⁻, carboxylic acids R¹CO₂⁻, wherein R¹ denotes alkyl or aryl and/or
2 An together represent a dianion selected from the group consisting of disulfonates R²(SO₃⁻)₂ and dicarboxylates R²(CO₂⁻)₂, wherein R² denotes alkane-diyl or aryl-diyl or
3 An together represent a trianion selected from the group consisting of tricarboxylates R³(CO₂⁻)₃, wherein R³ denotes alkane-triyl or aryl-triyl,
preferably An is selected from perchlorate, hexafluorophosphate, tetrafluoroborate, methanesulfonate, p-methylphenylsulfonate, trifluoromethylsulfonate and trifluoroacetate and 3 An together is citrate, more preferably An is selected from methanesulfonate) and trifluoromethanesulfonate.

3. The process according to claim 1 or 2, wherein
Cat is a monocation and selected from an alkali metal ion, such as lithium, sodium, potassium, rubidium and cesium, preferably sodium or potassium, or is an ammonium ion or a primary, secondary, tertiary or quaternary organic ammonium ion, in particular those of formula [N(C₁-C₁₈-alkyl)ₛHₜ]⁺ wherein s is 1, 2, 3 or 4 and t is (4-s), or is a guanidinium ion or an substituted guanidinium ion ⁺NHR⁶=C[N(C₁-C₁₈-alkyl)_{y}H_{z}]₂ wherein y is independently from the other y and each other either 1 or 2 and z is (2-y) and R⁶ denotes hydrogen or C₁-C₁₈-alkyl, or is a phosphonium ion [PR⁷]₄⁺, wherein R⁷ denotes alkyl or aryl, preferably aryl such as phenyl; or is a heterocyclylium cation, for example pyrimidinium or is heteroarylium, for example pyridinium or
Cat₂ as a whole is a primary, secondary, tertiary or quaternary organic diammonium ion, preferably of formula ⁺[N(C₁-C₁₈-alkyl)ₛHₜ]-R⁸-[N(C₁-C₁₈-alkyl)ₛHₜ]⁺ wherein s is 0, 1, 2 or 3 and t is 3-s and R⁸ denotes alkane-diyl or is a heteroarylium dication, for example bi-pyridinium,
whereby Cat preferably denotes a quaternary organic ammonium ion whereby tetraethylammonium is even more preferred.

4. The process according to any one of claims 1 to 3, wherein (MetSₓO₍₄₋ₓ₎) as a whole denotes tetrathiomolybdate MoS₄²⁻ or tetrathiotungstate WS₄²⁻, whereby tetrathiotungstate WS₄²⁻ is preferred.

5. The process according to any one of claims 1 to 4, wherein the at least one organic donor solvent include alcohols, for example methanol, ethanol, isopropanol, n-propanol, n-butanol, 2-butanol, n-pentanol, n-hexanol and cyclohexanol; ethers, for example diethyl ether, tert-butyl methyl ether, dioxane, tetrahydrofuran, tetrahydropyran, 1,1-dimethoxymethane, 1,2-dimethoxyethane, diethylene glycol dimethyl ether, tetraethylene gycol dimethyl ether; nitriles, for example acetotonitrile, benzonitrile and benzylnitrile; isonitriles for example cyclonhexylisonitrile; amines, for example diethylamine, trimethylamine, tri-n-propylamine, di-n-propylamine, diisopropylamine, triisopropylamine, piperidine and pyrrolidine; amides, for example formamide, acetamide, and dimethylacetamide; esters, for example acetic acid methyl ester and acetic acid ethyl ester, heteroaryls, for example pyridine, 2-, 3- or 4-methylpyridine, imidazole, 1-methylimidazole, pyrimidine, pyrrole and chinoline and any mixture of aforementioned solvents or solvent types, whereby preferred organic donor solvents are nitriles, for example acetonitrile, benzonitrile and benzylnitrile, whereby acetonitrile is even more preferred.

6. The process according to any one of claims 1 to 5, wherein the molar ratio of compounds of formula (II) to compounds of formula (I) is for example in the range of from 1 to 1000, preferably 2.8 to 12.0 and more preferably 3.0 to 5.0.

7. The process according to any one of claims 1 to 6, wherein the reaction temperature in step 1) is in the range of from the freezing point of the solvent to its boiling point or the boiling point of the lowest component thereof or is in the range of from -40°C to 100°C, preferably -35° to 60°C and more preferably 0° to 50°C.

8. The process according to any one of claims 1 to 7, wherein the at least two compounds of formula (I) comprising at least two different rare earth elements M are selected from at least two different of the three groups wherein in
| | |
|---|---|
| Group A: | M is La, Ce, Pr, Pm or Nd |
| Group B: | M is Eu, Yb, Sm, Tm, Dy |
| Group C: | M is Sc, Y, Nd, Gd, Tb, Ho, Er or Lu |
or wherein alternatively in
| | |
|---|---|
| Group A: | M is La, Ce, Pr, Pm or Nd |
| Group B: | M is Eu |
| Group C: | M is Sc, Y, Sm, Gd, Tb, Dy, Ho, Er, Tm, Yb or Lu |
whereby in each of the alternative groupings Met is preferably W.

9. The process according to any one of claims 1 to 8, wherein in step 2 the precipitate formed in step 1) is separated from the residual solution by a method selected from sedimentation and decantation, centrifugation and filtration.

10. The process according to any one of claims 1 to 9, wherein process further contains as a further step
3) reacting the compounds comprising the structural elements of formulae (III) or (IV) or (V) with at least one compound of formula (VI)
Cat₂An² (VI)
wherein Cat denotes a monocation, preferably a monocation as defined in claim 3 above, more preferably ammonium and
An² denotes oxalate, carbonate, sulfate or two equivalents of hydroxide or hydrogen carbonate, preferably oxalate
thereby obtaining compounds of formulae (VII) from compounds comprising the structural element of formula (III)
EuAn²
or compounds of formulae (VIII) from compounds comprising the structural element of formulae (IV) or (V)
M₂An²₃ (VIII)
wherein M has the same meaning including its preferential meaning as defined for formula (I) in claim 1
and further optionally recovering and/or and/or recycling of compounds of formula (II),
whereby preferably the materials comprising rare earth metal compounds encompass rare earth element ores like for example Monazite, Bastnäsite, Synchisite, Gadolinite, Samarskite, Euxenite, Pyrochlore or mixtures thereof, rare earth metal concentrates such as mixed rare earth metal oxides, carbonates or hydroxides, coal ashes and ashes obtained by burning electronic waste or waste comprising electronic components, used nuclear fuels, electronic waste materials such as for example large and small appliances, screens and monitors, telecommunication devices such as computers and mobile phones, magnets and fluorescent lamps.

11. The process according to claim 10, wherein process further contains as a further step
4) calcinating compounds of formula (VII) or (VIII) at a temperature of 500°C or more, preferably between 500 and 1200°C , more preferably between 600° and 1000°C.

12. The process according to any one of claims 1 to 11 whereby compounds of formula (I) are obtained by a process comprising the steps of
i) reacting materials comprising rare earth metal compounds with acids of formula (IX)
Hₘ-An³ₘ (IX)
wherein An³ₘ as a whole is a m-valent anion and m is 1, 2 or 3 in water to form aqueous solutions of compounds of formula (I)
ii) optionally separating the aqueous solutions of compounds of formula (I) from remaining solids
iii) optionally exchanging the m-valent anion An³ₘ by an anion An as defined above and preferably as defined above as specific and preferred embodiment
iv) drying
whereby the sequence of optional steps ii) and iii) may be changed.

13. Compounds comprising the structural units of formulae (III) or (IV) or (V)
Cat₂[M^{II}(MetSₓO₍₄₋ₓ₎)₂] (III)
Cat₃[M^{III}L_{z}(MetSₓO₍₄₋ₓ₎)₃] (IV)
Cat₆[M^{III}(MetSₓO₍₄₋ₓ₎)₃]₂ (V)
wherein Cat, Met, L, x and z have the same meaning as defined in claim 1 and
M in formula (III) is Eu, Yb, Sm, Tm or Dy
M in formula (IV) is Sc, Y, Sm, Eu, Gd, Tb, Dy, Ho, Er, Tm, Yb or Lu
M in formula (V) is La, Ce, Pr, Pm, Nd, Sm

14. A process for the production, purification or recycling of rare earth elements and their compounds comprising a process of any one of claims 1 to 12.

15. Use of compounds of formula (II) as defined in claim for the production, purification or recycling of rare earth elements and their compounds.
